# EUROPEAN PATENT APPLICATION

(11) **EP 3 407 596 A1**
(43) Date of publication of application: **28.11.2018**
(21) Application number: 17741460.4
(22) Date of filing: 19.01.2017
(51) Int. Cl.: H04N 5/64, G02B 27/02, G02C 11/00

(54) **HEAD-MOUNTED DISPLAY**

(30) Priority: 20.01.2016 JP 2016009133
(71) Applicant: Konica Minolta, Inc., Tokyo 100-7015 (JP)
(72) Inventor: OHSATO, Masayoshi, Tokyo 100-7015 (JP)
(74) Representative: Gille Hrabal
(86) International application number: PCT/JP2017/001666
(87) International publication number: WO 2017/126583

(57) **Abstract**

A head-mounted display (1A, 1B, 1C, 1D) includes an image display unit (a) and a wearable device (10, 20, 20B, 20C, 20D) . The image display unit (a) has an image generating unit that generates an image, and a display part (all) that is arranged in front of at least one eye of a wearer (H) and displays the image. To the wearable device (10, 20, 20B, 20C, 20D), the image display unit (a) is attached. The wearable device (10, 20, 20B, 20C, 20D) includes a main frame (10) arranged in front of a face of the wearer (H), and a pair of HMD temples (20, 20B, 20C, 20D) continuous to both ends of the main frame (10). The pair of the HMD temples (20, 20B, 20C, 20D) is provided with supports that are supported by glasses (100, 100A, 100B, 100C, 100D) worn by the wearer (H) so that the head-mounted display (1A, 1B, 1C, 1D) is worn by the wearer (H) . A pair of support parts (30, 30B, 30C, 30D) is provided by being connected to the pair of the HMD temples (20, 20B, 20C, 20D), the support parts (30, 30B, 30C, 30D) touching temples (101) of the glasses (100, 100A, 100B, 100C, 100D) in front of ears (H1) of the wearer (H) and constituting the supports.

## Description

### Technological Field

The present invention relates to a head-mounted display.

### Background Art

In recent years, there have been developed a head-mounted display that is worn on the head of a human body and allows the wearer to view images personally, and a wearable computer making use of this. If such a head-mounted display is connected to a mobile computer, computer graphics screens are formed in front of an eye(s) of a user as virtual images, and accordingly a wearable computer having a display wearable on the head of a user is provided.

As a specific form of the head-mounted display, as disclosed in Patent Documents 1 and 2, there is a type of head-mounted display that projects images to at least one eye, the type being expected to be used by a user who wears glasses and accordingly being worn from above the glasses. In particular, there is a type of head-mounted display that keeps its wearing state by being supported by glasses of a user.

The head-mounted display disclosed in each of Patent Documents 1 and 2 adopts a glass-frame-like wearable device having a pair of temples continuous to both ends of a main frame (front) arranged in front of the face of a wearer.

In Patent Document 1, there is proposed a wearing form in which the head-mounted display is placed on the upper surface of a front frame of glasses and put to a forehead.

In Patent Document 2, there is proposed a wearing form in which the head-mounted display touches a bridge of glasses from the above.

### Related Art Documents

### Patent Documents

Patent Document 1: Japanese Patent Application Publication No. 2012-60616
Patent Document 2: Japanese Patent Application Publication No. 2011-160166

### Summary of the Invention

### Problems to be Solved by the Invention

However, the inventions disclosed in Patent Documents 1 and 2 have the following problems.

A display part of a head-mounted display has a certain amount of weight. If such a head-mounted display is placed on the front of glasses as disclosed in Patent Documents 1 and 2, problems arise in wearability. For example, the head-mounted display goes down by the weight together with the glasses, and a point(s) which a nose pad touches becomes painful by long time use.

Further, the front of glasses comes in various shapes, and there are glasses on which the head-mounted display cannot be placed. Thus, its applicability to glasses chosen by a user(s) is narrow.

Still further, the forehead and the nose of a person come in various shapes, and also combinations thereof with a glass frame(s) are various. Accordingly, a person having a very short distance between the forehead and the front of glasses or a very short distance between the nose and the bridge may not be able to put the front of the head-mounted display on the front of the glasses.

Even if the wearer can put the front of the head-mounted display on the front of glasses, if he/she faces down or does activities, such as sports or works, the head-mounted display may somewhat slip forward and fall.

In the invention disclosed in Patent Document 1, in addition to the point(s) on the head which the worn glasses already touch, there will be an additional touch point(s) on the forehand. Because the additional touch point(s) is on the face, wearing comfort decreases. Further, because the additional touch point(s) is on the face, by change in muscles of facial expression, the display part may slip, or the head-mounted display may fall. Still further, the part touching the forehead easily becomes dirty by sweat, fat and/or the like, which tends to give persons discomfort if the head-mounted display is shared by the persons.

The present invention has been conceived in view of the above problems of the conventional technologies, and objects of the present invention include providing a head-mounted display that is hardly affected by the shape of glasses worn by a wearer or the shape of the face of the wearer, can be stably worn by being supported by the glasses, and excels in wearability (fitting) and displayability (display performance).

### Means for Solving the Problems

The present invention described in claim 1 to achieve the abovementioned object(s) is a head-mounted display including:
an image display unit having an image generating unit that generates an image, and a display part that is arranged in front of at least one eye of a wearer and displays the image; and
a wearable device to which the image display unit is attached, wherein
the wearable device includes a main frame arranged in front of a face of the wearer, and a pair of HMD temples continuous to both ends of the main frame,
the pair of the HMD temples is provided with supports that are supported by glasses worn by the wearer so that the head-mounted display is worn by the wearer, and
a pair of support parts is provided by being connected to the pair of the HMD temples, the support parts touching temples of the glasses in front of ears of the wearer and constituting the supports.

The temples which a head-mounted display has are referred to as "HMD temples" to be distinguished from the temples of glasses.

### Advantageous Effects of the Invention

According to the present invention, the support parts provided on the HMD temples touch the temples of glasses worn by a wearer and constitute the supports. This can provide a head-mounted display that is hardly affected by the shape of glasses worn by a wearer or the shape of the face of the wearer, can be stably worn by being supported by the glasses without an inclined load to the front, and excels in wearability and displayability.

### Brief Description of the Drawings

FIG. 1 is a right-side view showing a wearing state of a head-mounted display according to a first embodiment of the present invention.
FIG. 2 is a perspective view of the head-mounted display according to the first embodiment of the present invention.
FIG. 3A is a top view of the head-mounted display according to the first embodiment of the present invention, and shows a form in which HMD temples are brought inward.
FIG. 3B is a top view of the head-mounted display according to the first embodiment of the present invention, and shows a form in which the HMD temples are brought outward.
FIG. 4 is a perspective view of a support part of the head-mounted display according to the first embodiment of the present invention.
FIG. 5 is an exploded, bird's-eye perspective view of the support part of the head-mounted display according to the first embodiment of the present invention.
FIG. 6 is an exploded, worm's-eye perspective view of the support part of the head-mounted display according to the first embodiment of the present invention.
FIG. 7A is a top view of the support part of the head-mounted display according to the first embodiment of the present invention, and shows a form in which a rubber pad is inclined to the left.
FIG. 7B is a top view of the support part of the head-mounted display according to the first embodiment of the present invention, and shows a form in which the rubber pad is inclined to the right.
FIG. 8A is a perspective view of the support part of the head-mounted display according to the first embodiment of the present invention.
FIG. 8B is a perspective view showing a state in which a rear part of the HMD temple is fitted to the support part of the head-mounted display according to the first embodiment of the present invention.
FIG. 9 is a cross-sectional view showing a connecting portion where the support part is connected to the HMD temple of the head-mounted display according to the first embodiment of the present invention being cut vertically.
FIG. 10 is a cross-sectional view showing the support part of the head-mounted display according to the first embodiment of the present invention being cut along a central plane in a width direction.
FIG. 11A is a left-side view of a portion including the support part of the head-mounted display according to the first embodiment of the present invention.
FIG. 11B is a right-side view of the portion including the support part of the head-mounted display according to the first embodiment of the present invention, wherein an angle of the support part to the HMD temple is different from that in the form shown in FIG. 11A.
FIG. 12A is a top view showing the support part of the head-mounted display according to the first embodiment of the present invention and glasses that support the support part.
FIG. 12B is a top view showing the support part of the head-mounted display according to the first embodiment of the present invention and glasses that support the support part, wherein a width of the glasses is different from that in the form shown in FIG. 12A.
FIG. 13A is a left view showing the head-mounted display according to the first embodiment of the present invention and glasses that support the head-mounted display, and shows a state in which the support part is above the HMD temple.
FIG. 13B is a left view showing the head-mounted display according to the first embodiment of the present invention and the glasses that support the head-mounted display, and shows a state in which the support part touches the HMD temple.
FIG. 14A is a left view showing the head-mounted display according to the first embodiment of the present invention and glasses that support the head-mounted display.
FIG. 14B is a left view showing the head-mounted display according to the first embodiment of the present invention and the glasses that support the head-mounted display, and shows a form in which an image display unit is lowered as compared with the form shown in FIG. 14A.
FIG. 15 is a perspective view of the head-mounted display according to the first embodiment of the present invention, and shows a state in which the image display unit is detached from a wearable device, and is a diagram to explain that the image display unit can be turned upside down and attached.
FIG. 16A is a perspective view of the head-mounted display according to the first embodiment of the present invention.
FIG. 16B is a perspective view of the head-mounted display according to the first embodiment of the present invention, and shows a form in which the image display unit has been turned upside down and attached from the form shown in FIG. 16A.
FIG. 17A shows a state in which the head-mounted display has been inverted vertically and thereby inverted horizontally from the state shown in FIG. 16B.
FIG. 17B shows a form in which the support parts have been inverted vertically from the form shown in FIG. 17A.
FIG. 18A is a perspective view to show how the support part(s) of the head-mounted display according to the first embodiment is inverted vertically.
FIG. 18B is a perspective view to show how the support part(s) of the head-mounted display according to the first embodiment is inverted vertically.
FIG. 18C is a perspective view to show how the support part(s) of the head-mounted display according to the first embodiment is inverted vertically.
FIG. 19 is a perspective view of a head-mounted display according to a second embodiment of the present invention.
FIG. 20A is a perspective view of a portion including a support part of the head-mounted display according to the second embodiment of the present invention.
FIG. 20B is a perspective view of the portion including the support part of the head-mounted display according to the second embodiment of the present invention, wherein a vertical position of the support part with respect to an HMD temple is different from that in the form shown in FIG. 20A.
FIG. 21 is a worm's-eye perspective view of the portion including the support part of the head-mounted display according to the second embodiment of the present invention.
FIG. 22A is a left view showing the head-mounted display according to the second embodiment of the present invention and glasses that support the head-mounted display.
FIG. 22B is a left view showing the head-mounted display according to the second embodiment of the present invention and glasses that support the head-mounted display, and shows a form in which the support part is lowered as compared with the form shown in FIG. 22A, taking the HMD temple as a reference.
FIG. 23 is a perspective view of a head-mounted display according to a third embodiment of the present invention.
FIG. 24A is a perspective view of a portion including a support part of the head-mounted display according to the third embodiment of the present invention.
FIG. 24B is a perspective view of the portion including the support part of the head-mounted display according to the third embodiment of the present invention, wherein an angle of the support part to an HMD temple is different from that in the form shown in FIG. 24A.
FIG. 24C is a perspective view of the portion including the support part of the head-mounted display according to the third embodiment of the present invention, wherein the angle of the support part to the HMD temple is different from that in each of the forms shown in FIG. 24A and FIG. 24B.
FIG. 25 is a worm's-eye perspective view of the portion including the support part of the head-mounted display according to the third embodiment of the present invention and glasses.
FIG. 26A is a top view of the head-mounted display according to the third embodiment of the present invention.
FIG. 26B is a top view of the head-mounted display according to the third embodiment of the present invention, wherein an arrangement form of the HMD temples is different from that in the form shown in FIG 26A.
FIG. 26C is a top view of the head-mounted display according to the third embodiment of the present invention, wherein the arrangement form of the HMD temples is different from that in each of the forms shown in FIG. 26A and FIG. 26B.
FIG. 27A is a left view showing a head-mounted display according to a fourth embodiment of the present invention and glasses that support the head-mounted display.
FIG. 27B is a left view showing the head-mounted display according to the fourth embodiment of the present invention and glasses that support the head-mounted display, wherein a shape of the glasses and arrangement of the image display unit are different from those in the form shown in FIG. 27A.

### Embodiments for Carrying out the Invention

Hereinafter, embodiments of the present invention are described with reference to the drawings. The following merely describes embodiments of the present invention and is not intended to limit the present invention. In the drawings, a right-left direction axis X, a front-back direction axis Y and an up-down direction axis Z are shown.

### [First Embodiment]

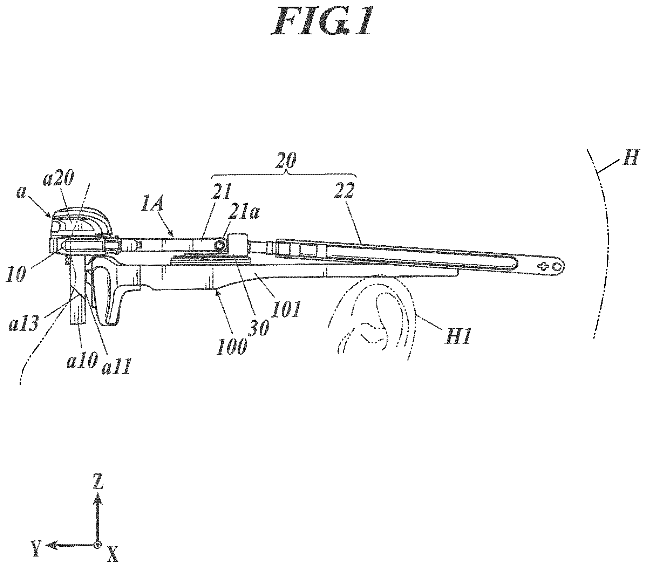

First, a first embodiment of the present invention is described with reference to FIG 1 to FIG 18C.

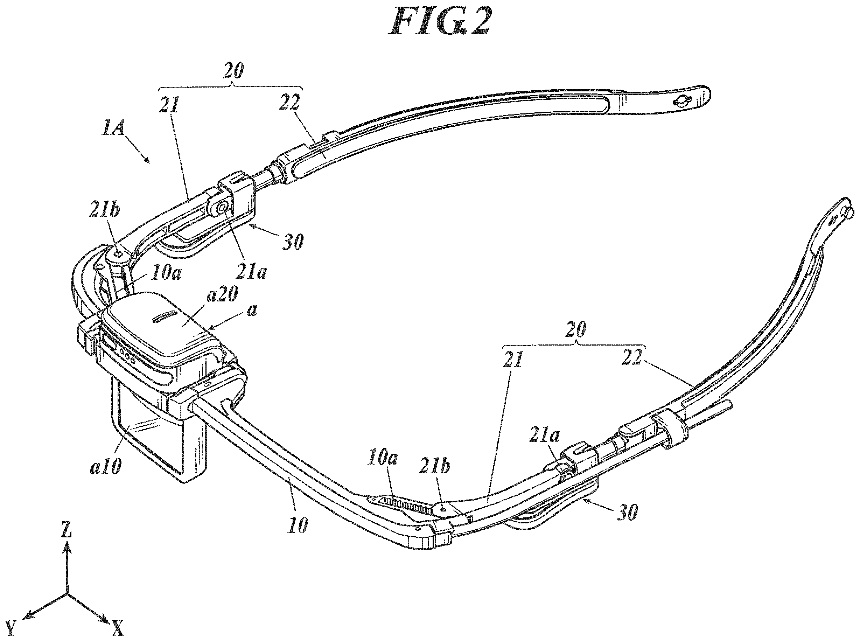

As shown in FIG. 1 and FIG. 2, a head-mounted display 1A of this embodiment includes an image display unit a and a wearable device to which the image display unit a is attached. This wearable device includes a main frame 10 arranged in front of the face of a wearer H and a pair of HMD temples 20, 20 continuous to both ends of the main frame 10.

Each HMD temple 20 is divided into a fore part 21 and a rear part 22. The HMD temple 20 is a straight temple having the rear part 22 formed straight. This is made as a straight temple to carry out the below-described right-left switching in particular.

The image display unit a is configured such that a display member a10 arranged in front of an eye of the wearer H and an image generating unit (not shown) to generate images displayed by the display member a10 are fixed to a casing a20, and the base end portion of the display member a10 and the image generating unit are housed in the casing a20.

A display part a11 is configured such that images are observed on a side surface (rear side surface) of a portion of the display member a10, the portion projecting from the casing a20.

The image display unit a guides image light generated by the image generating unit to a pupil of the wearer H via the display member a10. The image generating unit housed in the casing a20 includes a light source and liquid crystal display elements. The image light generated by the image generating unit travels while being reflected in the display member a10, and is incident on a hologram element a13 arranged aslant in the display member a10. The hologram element a13 diffracts light having specific wavelengths (three wavelengths corresponding to R, G and B) only, and is provided in such a way as to direct the light to the pupil of the wearer H. Thus, the display member a10 constitutes a see-through display member that can transmit outside light and make the light incident on the pupil of the wearer H. The wearer H can view an actual observed image(s) of the outside and a display image(s) (virtual image(s)) of the image light guided via the display member a10, the display image being overlapped on a portion of the actual observed image, and even in the area of the display image, can view the actual observed image through the display member a10.

The head-mounted display 1A of this embodiment is a display-for-one-eye type, but a display-for-both-eyes type may be carried out.

As shown in FIG. 1 and FIG. 2, the HMD temples 20, 20 are provided with supports that are supported by glasses 100 worn by the wearer H so that the head-mounted display 1A is worn by the wearer H. The supports are constituted of support parts 30, 30 which form a pair.

That is, each of the support parts 30, 30 touches a temple 101 of the glasses 100 in front of an ear HI of the wearer H, and constitutes the support. The support part 30 of this embodiment is in the form of touching the upper end of the temple 101, namely, of being placed on the temple 101.

The support parts 30, 30 are provided by being connected to the HMD temples 20, 20. More specifically, each support part 30 is connected to the rear part 22 of the HMD temple 20.

The fore part 21 of the HMD temple 20 is connected, in front of a connecting portion where the support part 30 is connected to the rear part 22, to the rear part 22 via a shaft hinge 21a to be rotatable vertically (upward and downward) with respect to the rear part 22. The axis direction of the shaft hinge 21a is the X axis direction.

The front end of each HMD temple 20 is connected to the main frame 10 by a shaft hinge 21b. The axis direction of the shaft hinge 21b is the Z direction. Like a typical glass frame, the pair of the HMD temples 20, 20 can be opened and closed.

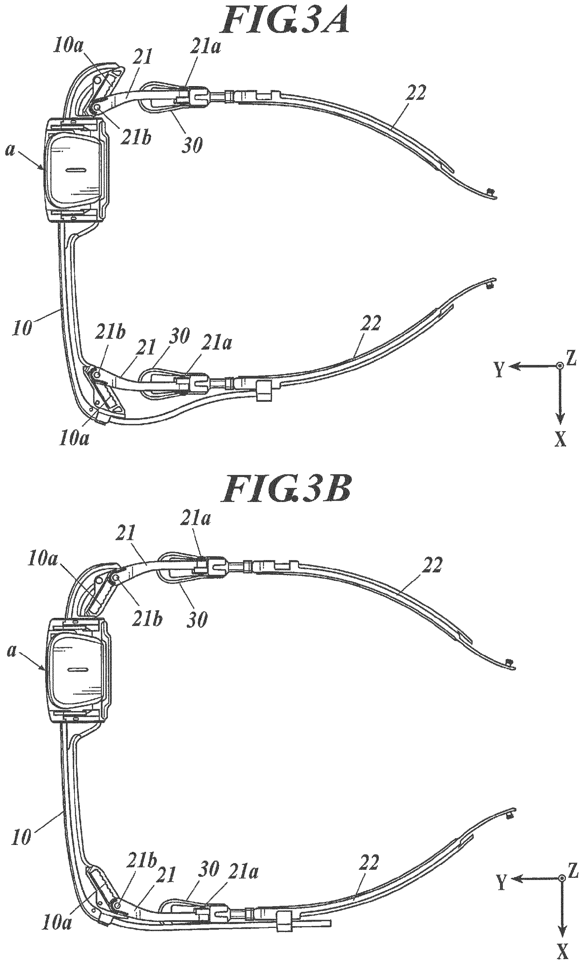

The shaft hinge 21b is movably held in a guide hole 10a. The front ends of the HMD temples 20, 20 can be close to and away from one another by the shaft hinges 21b moving along the guide holes 10a. That is, as shown in FIG. 3A, to fit a relatively small head size, the HMD temples 20, 20 can be arranged relatively close to one another in a state in which they are approximately parallel to one another, and as shown in FIG. 3B, to fit a relatively large head size, the HMD temples 20, 20 can be arranged relatively away from one another in the state in which they are approximately parallel to one another. Thus, appropriate adjustment can be performed within a range from the state shown in FIG. 3A to the state shown in FIG. 3B. Further, the guide holes 10a are formed aslant such that the pair of the HMD temples 20, 20 as a whole is arranged slightly forward to fit the relatively small head size as shown in FIG. 3A, and arranged slightly backward to fit the relatively large head size as shown in FIG. 3B.

It is preferable that a serration be formed on the inner edge of each guide hole 10a so as to make each shaft hinge 21b movable stepwise at predetermined pitches and to hold the shaft hinge 21b at each point. Further, a forming member of each guide hole 10a has an appropriate degree of elasticity to allow position adjustment of each shaft hinge 21b. This makes it possible to unmovably hold the shaft hinges 21b and also adjust the positions thereof by force being applied in an extending direction of the guide holes 10a, during the use.

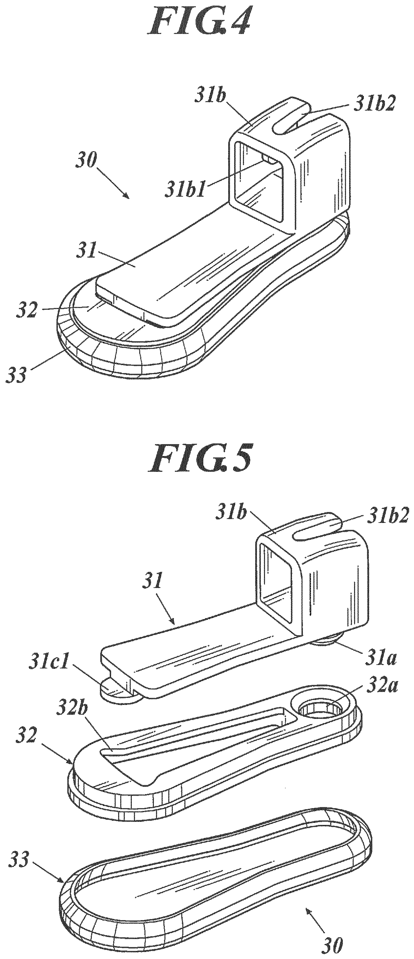

Next, configuration of the support part 30 alone and connecting configuration of the support part 30 to the HMD temple 20 are described. (Refer to FIG 4 to FIG 10 as needed.)

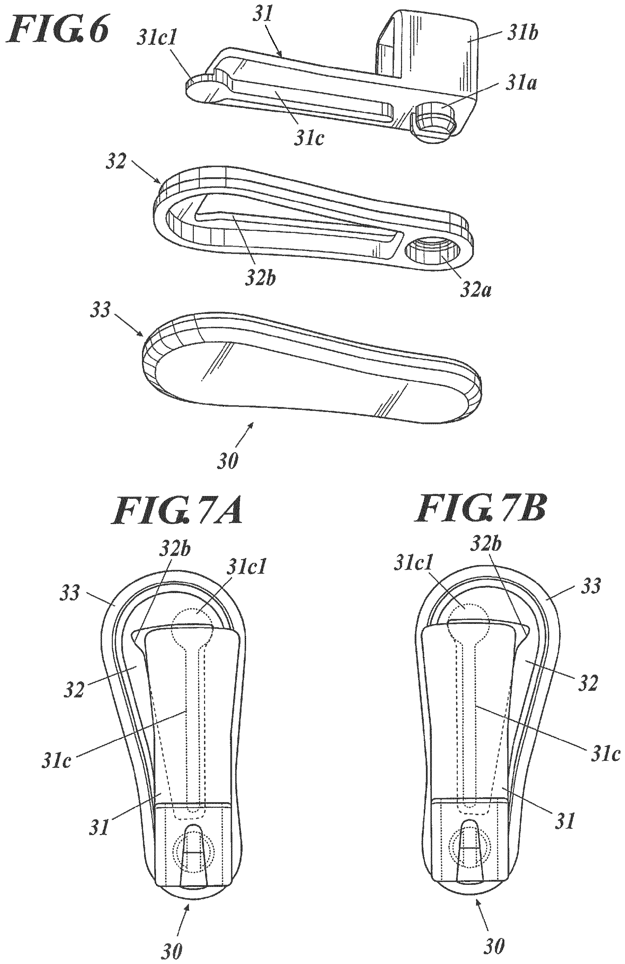

FIG. 4 is a perspective view of the support part 30, and FIG. 5 and FIG. 6 are exploded views thereof. The support part 30 is constituted of three components of a connecting frame 31, a horizontally rotating frame 32 and a rubber pad 33.

The rubber pad 33 is made of non-slip rubber material because it is a part that touches the temple 101 of the glasses 100.

The horizontally rotating frame 32 is fitted inside the rubber pad 33, so that the rubber pad 33 is fixed to the horizontally rotating frame 32 integrally. The horizontally rotating frame 32 and the rubber pad 33 have their respective retaining shapes to fix one another, and with elastic deformation of the rubber pad 33, the horizontally rotating frame 32 is fitted inside the rubber pad 33.

A horizontally rotating shaft part 31a is provided at the rear end portion of the connecting frame 31 in such a way as to project, and a bearing female part 32a that fits the horizontally rotating shaft part 31a is provided in such a way as to be pierced through the horizontally rotating frame 32. The horizontally rotating shaft part 31a is fitted in the bearing female part 32a, and the horizontally rotating frame 32 is held by the connecting frame 31 to be rotatable horizontally (to the right and the left). The horizontally rotating shaft part 31a and the bearing female part 32a have their respective retaining shapes to fix one another, the horizontally rotating shaft part 31a has a slit for easy elastic deformation, and with the elastic deformation of the horizontally rotating shaft part 31a, the horizontally rotating shaft part 31a is fitted in the bearing female part 32a.

After the fitting, the inner surface of the bearing female part 32a is pressed by elastic recovery force of the horizontally rotating shaft part 31a. Thus, the horizontally rotating frame 32 and the connecting frame 31 are fitted and connected to one another by electric friction fitting.

In front of the bearing female part 32a of the horizontally rotating frame 32, an approximately fan-shaped rotation restriction hole 32b is formed, and in front of the horizontally rotating shaft part 31a of the connecting frame 31, a rotation restriction convex part 31c is formed. The front end portion of the rotation restriction convex part 31c constitutes a front holding projection 31c1 that projects forward.

To fit the horizontally rotating shaft part 31a into the bearing female part 32a, first, the front holding projection 31c1 is inserted into the rotation restriction hole 32b so as to be arranged on a side where the rubber pad 32 is attached, and the horizontally rotating shaft part 31a is pushed into the bearing female part 32a.

As shown in FIG. 7A and FIG. 7B, the rotation restriction convex part 31c abuts the inner edge of the rotation restriction hole 32b, so that the horizontal rotation of the horizontally rotating frame 32 (and the rubber pad 33 fixed thereto integrally) is restricted, for example, set to ±5°.

On the opposite side of the horizontally rotating shaft part 31a, which is provided at the rear end portion of the connecting frame 31, a connecting housing 31b is formed. The connecting housing 31b has structure in which the front surface and the rear surface are open, and the right-side surface, the left-side surface and the upper surface have members. Pivot projections 31b1, 31b1 are formed on the inner sides of the right-side surface and the left-side surface, and a slit 31b2 cut from the rear end is formed in the upper surface. The formed slit 31b2 makes the pivot projections 31b1, 31b1 on the right-side surface and the left-side surface deform easily, for example, be away from one another or be close to one another, by elastic deformation of the connecting housing 31b. The pivot projections 31b1, 31b1 are formed coaxially and arranged to face one another.

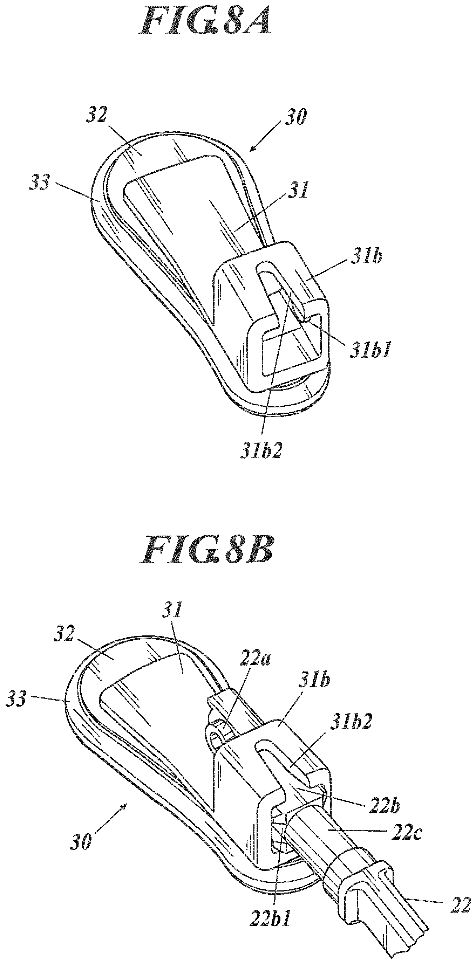

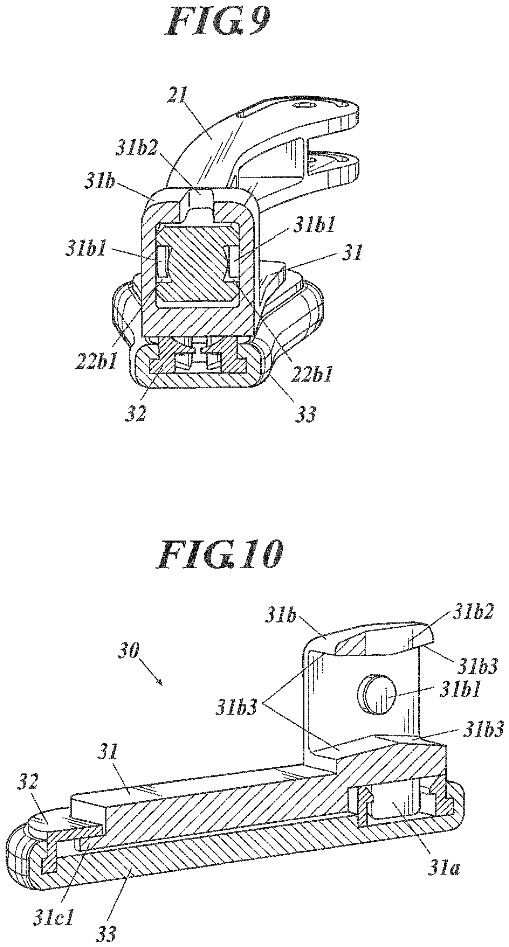

As shown in FIG. 8B, FIG. 9 and so forth, from behind the connecting housing 31b, the rear part 22 of the HMD temple 20 is inserted. The rear part 22 has: a hinge connecting part 22a that connects with the shaft hinge 21a; a support-part connecting part 22b that connects with the connecting housing 31b; and a columnar part 22c that are arranged in this order from the front side.

From behind the connecting housing 31b, the rear part 22 is inserted, the hinge connecting part 22a is projected forward from the connecting housing 31b, and the support-part connecting part 22b is fitted into the connecting housing 31b. In the right-side surface and the left-side surface of the support-part connecting part 22b, guide grooves 22b1, 22b1 that extend in the front-back direction are formed. The pivot projections 31b1, 31b1 are fitted in the guide grooves 22b1, 22b1, and the support-part connecting part 22b pushes the connecting housing 31b to the right and the left, so that fixing is carried out. Thus, the support part 30 and the HMD temple 20 are fitted and connected to one another by electric friction fitting.

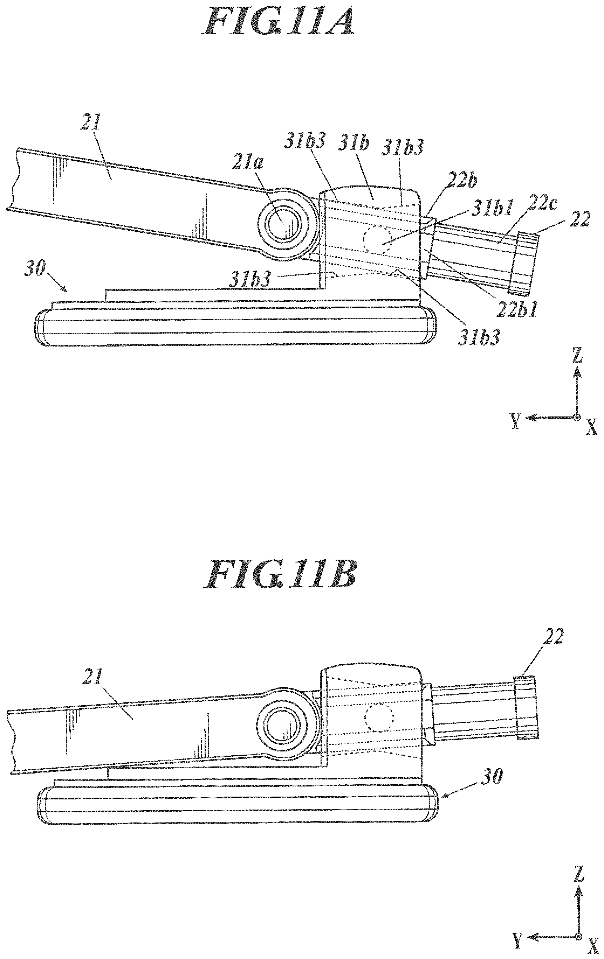

As shown in FIG. 10, the inner-side upper and lower surfaces of the connecting housing 31b are formed to incline such that space between the upper surface and the lower surface becomes larger toward the front and rear opening ends, taking the pivot projections 31b1 as the point(s) of origin. As shown in FIG 11A and FIG 11B, the support-part connecting part 22b abuts these inclined surfaces 31b3, so that vertical rotation of the support part 30 about the pivot projections 31b1 is restricted to a desired angle range.

As described above, the support part 30 is formed to be approximately parallel to and long in a longitudinal direction (longer direction) of the HMD temple 20, and at the rear end portion close to an ear, connected to be rotatable vertically and horizontally with respect to the HMD temple 20. The support part 30, to be specific, the rubber pad 33, which is the part that touches the HMD temple 20, is formed to be approximately parallel to and long in the longitudinal direction of the HMD temple 20. This ensures a large contact area (touch area) of the rubber pad 33 and the HMD temple 20, and makes it possible to exhibit the non-slip effect to the upmost.

Further, the pivot projections 31b1, 31b1 are movable along the guide grooves 22b1, 22b1 by friction sliding. Hence, the support part 30 is connected to the HMD temple 20 to be slidable forward and backward along the HMD temple 20.

Further, the support part 30 and the HMD temple 20 are fitted and connected to one another by elastic friction fitting such that an operation to arrange the support part 30 with respect to the HMD temple 20 is allowed and the support part 30 is stably held by the HMD temple 20 by arbitrary arrangement. The arrangement operation to be subjected to the action of the friction fitting includes the vertical (upward and downward) rotation, the horizontal (rightward and leftward) rotation and the forward/backward (forward and backward) sliding movement of the support part 30 with respect to the HMD temple 20.

The above-described moving function of the support part(s) 30 exhibits the following action effects.

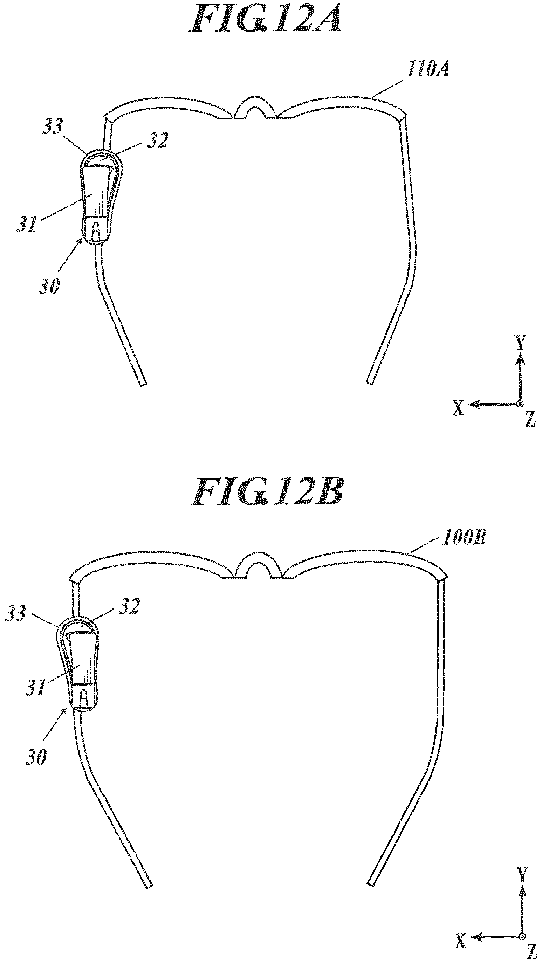

As shown in FIG. 12A, if glasses worn by the wearer H are relatively small glasses 100A, the rubber pad(s) 33 is arranged by being rotated inward and thereby can be adjusted positionally to be placed on a temple(s) of the glasses 100A.

As shown in FIG. 12B, if glasses worn by the wearer H are relatively large glasses 100B, the rubber pad(s) 33 is arranged by being rotated outward and thereby can be adjusted positionally to be placed on a temple(s) of the glasses 100B.

The position adjustment of the rubber pad(s) 33 inward and outward can also be achieved by the above-described movement of the HMD temples 20 as a whole along the guide holes 10a. The function by the horizontal rotation of the rubber pad(s) 33 is different from the above in that the rubber pad(s) 33 moves independently from the HMD temple(s) 20. Hence, even after the position(s) of the HMD temple(s) 20 in wearing is fixed, the rubber pad(s) 33 can be moved to the right and the left independently.

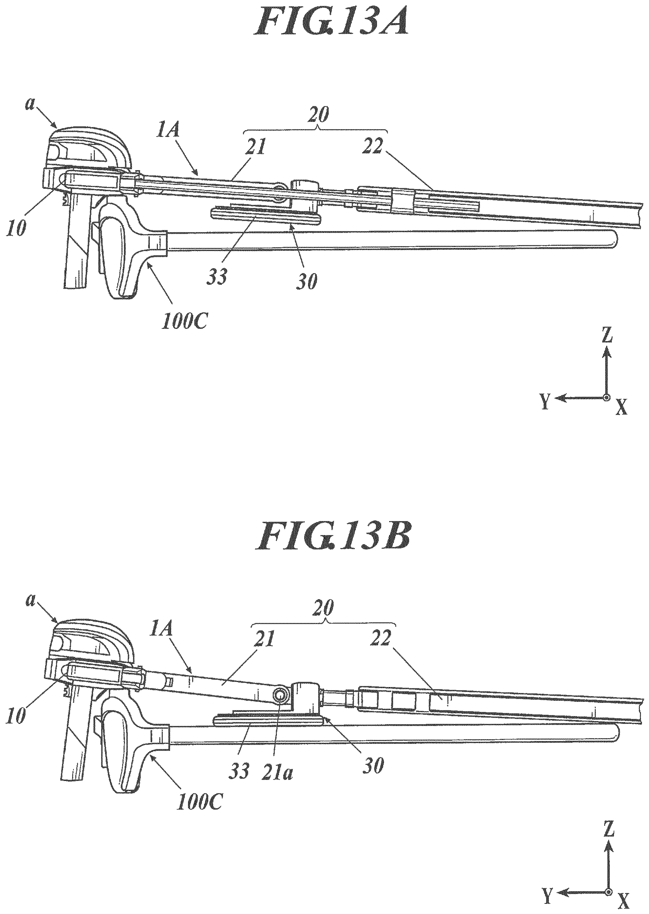

A case is described where the head-mounted display 1A is worn by being supported by glasses 100C in which the upper end of its front is higher than its temples and difference therebetween is relatively large as shown in FIG. 13A and FIG. 13B.

If the HMD temple 20 is straight from the fore part 21 to the rear part 22, the rubber pad 33 may be above the temple of the glasses 100C as shown in FIG. 13A. In this case, as shown in FIG 13B, the HMD temple 20 is bent by the shaft hinge 21a, and accordingly the support part 30 is lowered, so that the rubber pad 33 can touch the temple of the glasses 100C. At the time, the support part 30 is rotated vertically as needed such that the lower surface of the rubber pad 33 becomes parallel to the upper surface of the temple of the glasses 100C. This ensures a large contact area of the rubber pad 33 and the temple.

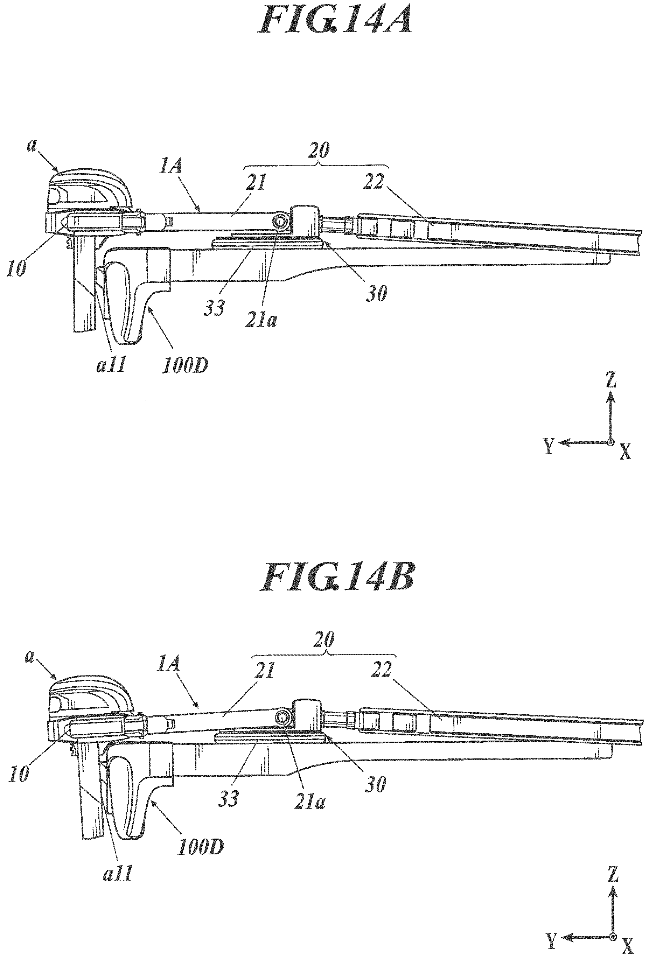

A case is described where the head-mounted display 1A is worn by being supported by glasses 100D in which the upper end of its front is the same height as its temples, or higher than the temples but difference therebetween is relatively small as shown in FIG. 14A and FIG. 14B.

In this case too, the support part 30 is rotated vertically as needed such that the lower surface of the rubber pad 33 becomes parallel to the upper surface of the temple of the glasses 100D. This ensures a large contact area of the rubber pad 33 and the temple.

By rotating the fore part 21 about the shaft hinge 21a to the state shown in FIG. 14B from the state shown in FIG. 14A or to the state shown in FIG. 14A from the state shown in FIG. 14B, the image display unit a moves vertically, and accordingly the height position of the display part a11 can be adjusted.

The connection at the shaft hinge 21a is also configured to do friction sliding with an appropriate degree of resistance.

The forward/backward sliding movement of the support part 30 can adjust the position of the rubber pad 33 in the front-back direction. This can adjust the position of the rubber pad 33 in the front-back direction according to the shape of the glasses 100 (100C, 100D). For example, the rubber pad 33 is arranged on a flat surface or a large-area portion of the glasses 100 (100C, 100D), or the front end of the rubber pad 33 is made to abut a standing portion from the temple to the front of the glasses 100 (100C, 100D), so that forward slip can be prevented.

Further, it is possible to adjust the position of the rubber pad 33 in the front-back direction as needed according to the shape of the face of the wearer H. For example, hard contact/touch of the rubber pad 33 to a side of the face may be avoidable by adjusting the position of the rubber pad 33 in the front-back direction.

The forward/backward slidable amount of the support part 30 can be increased by forming the support-part connecting part 22b and the guide grooves 22b1, 22b1 to be long.

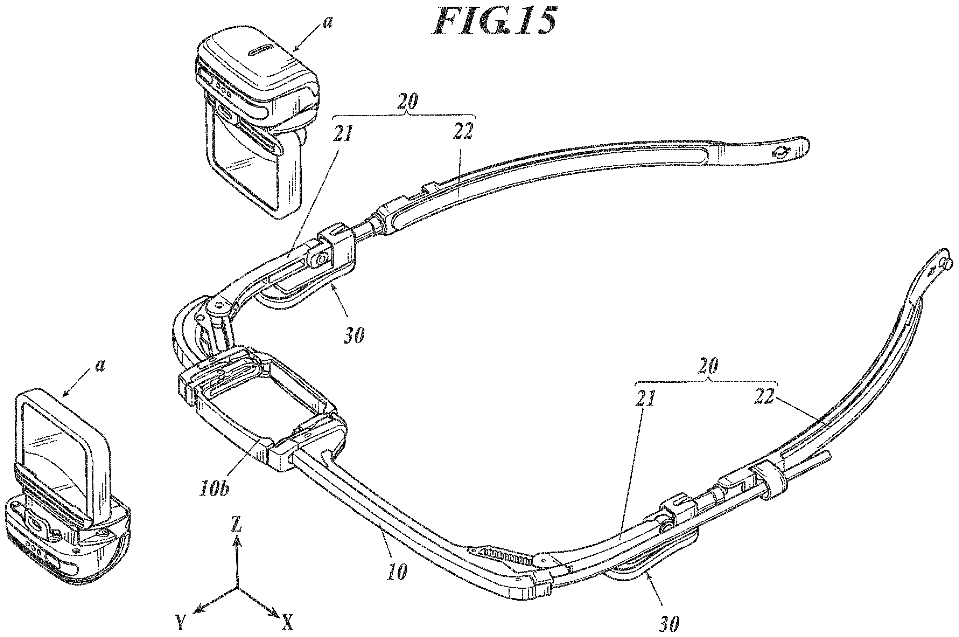

As shown in FIG. 15, the image display unit a is configured to be attachable/detachable to/from the main frame 10, and to be settable on the main frame 10 with the image display unit a vertically inverted. A unit supporting frame 10b to which the image display unit a is attached is vertically rotatable on the X axis. That is, a vertical rotation supporting mechanism (a flapping angle adjustment mechanism) for the image display unit a is configured. Because the axis of the rotation is away from the display part a11, with the vertical rotation of the image display unit a, not only the flapping angle of the display part a11 but also the height position of the display part a11 are changed.

From each of the states shown in FIG. 13A, FIG. 13B, FIG. 14A and FIG. 14B, the flapping angle and the height position of the display part a11 can be further adjusted by using the vertical rotation supporting mechanism (the flapping angle adjustment mechanism) for the image display unit a, and the display part a11 can be adjusted to an appropriate position by the vertical rotation of the image display unit a in cooperation with the movement of the HMD temple(s) 20.

Next, the right-left switching of the image display unit a is described.

The head-mounted display 1A is switchable between a display-for-right-eye form and a display-for-left-eye form.

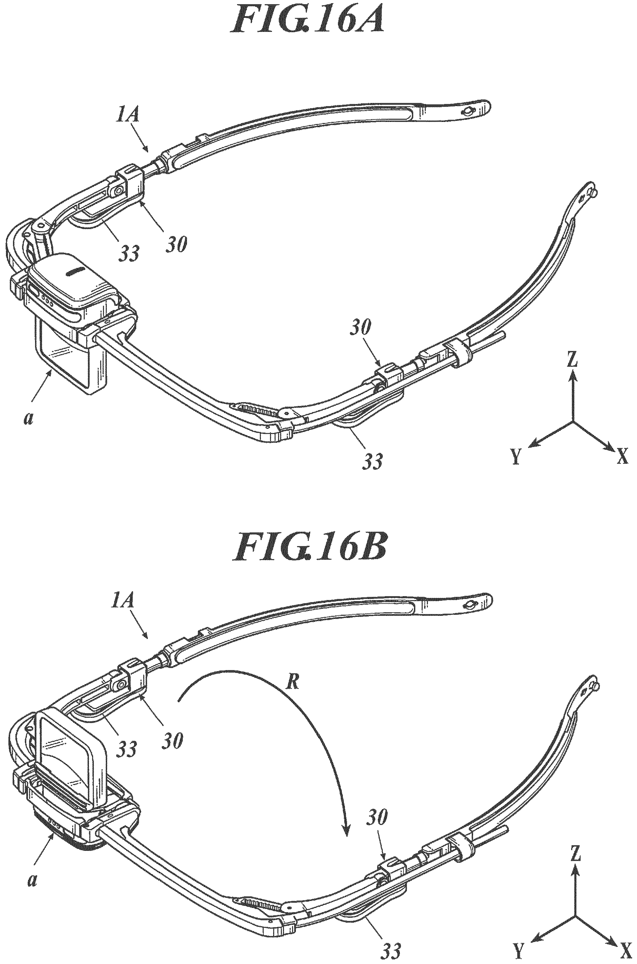

First, in the display-for-right-eye form shown in FIG. 16A, the image display unit a is detached as shown in FIG. 15, and vertically inverted on the Y axis and attached to be in the state shown in FIG. 16B.

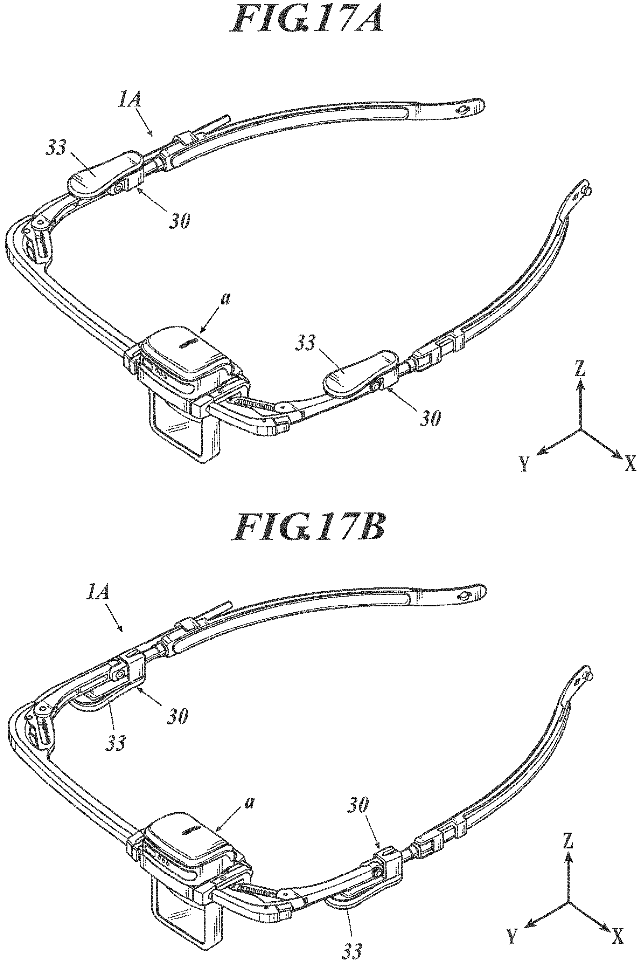

Next, as indicated by an arrow R in FIG. 16B, the head-mounted display 1A is rotated 180° on the Y axis to be in the state shown in FIG. 17A. If the head-mounted display 1A in this state is worn, the image display unit a is arranged in front of the left eye. However, as shown in FIG. 17A, the rubber pads 30 face upward. Then, the support parts 30 are rotated 180° on the Y axis to be in the state shown in FIG. 17B and thereby become usable.

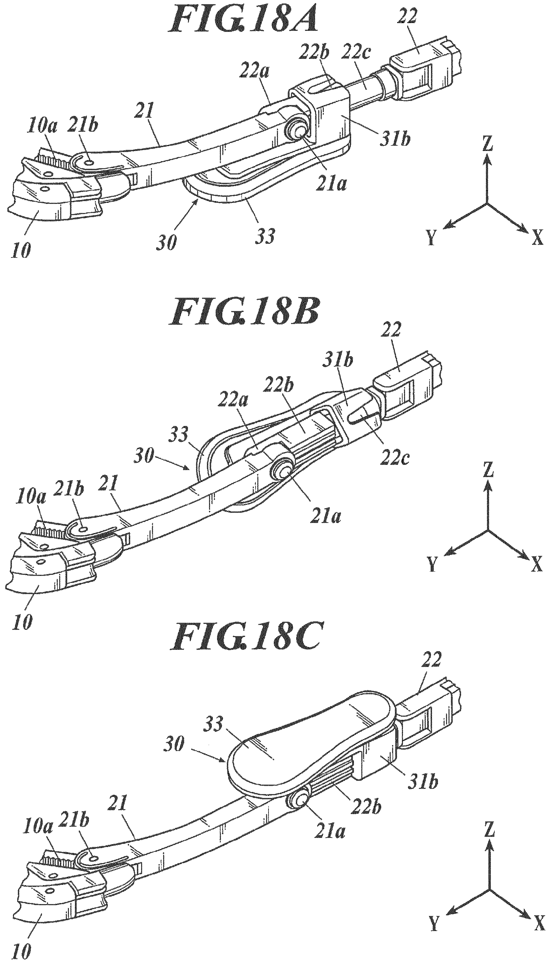

The rotation operation of each support part 30 on the Y axis is performed as shown in FIG. 18A, FIG. 18B and FIG. 18C. First, the support part 30 is moved backward with respect to the rear part 22 of the HMD temple 20, so that the connecting housing 31b is separated from the support-part connecting part 22b and arranged around and on the columnar part 22c. The columnar part 22c is configured to have a small diameter such that the connecting housing 31b rotates thereon. Hence, the support part 30 can be rotated 180° on the Y axis. That is, the support part 30 is configured to be settable on the HMD temple 20 with the support part 30 inverted 180° about the longitudinal-direction axis of the HMD temple 20 while being held by the HMD temple 20.

After the support part 30 is inverted 180°, the support part 30 is brought back forward such that the connecting housing 31b fits the support-part connecting part 22b.

Because the above-described 180° inversion mechanism having the connecting housing 31b and the columnar part 22c as the main components is configured, the support part(s) 30 does not need to be detached and accordingly can be prevented from being lost, and also can be prevented from falling by accident.

### [Second Embodiment]

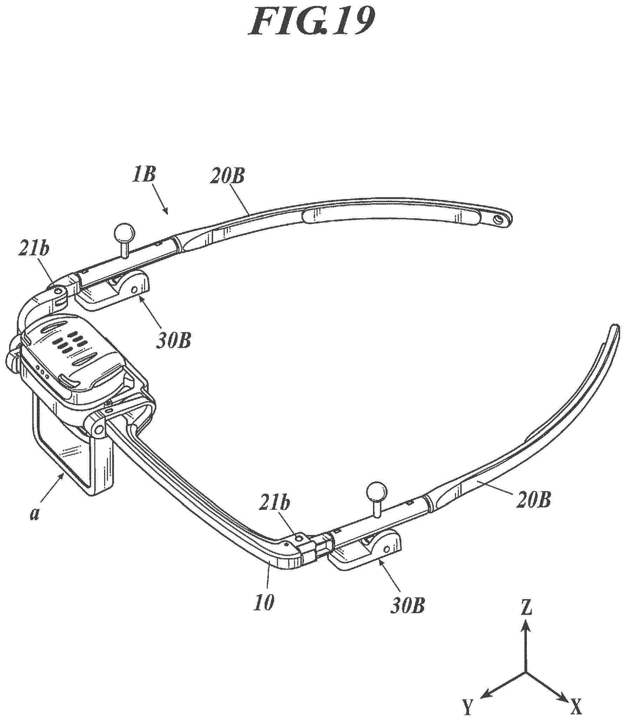

Next, a head-mounted display 1B according to a second embodiment of the present invention is described with reference to FIG. 19 to FIG. 22B.

Differences between this embodiment and the first embodiment are in configuration and moving mechanism of each support part 30B. Further, this embodiment does not adopt the vertical rotation about the shaft hinge(s) 21a in the first embodiment, and right and left HMD temples 20B are each a single component. For the components corresponding to those of the first embodiment, the same reference numerals are used.

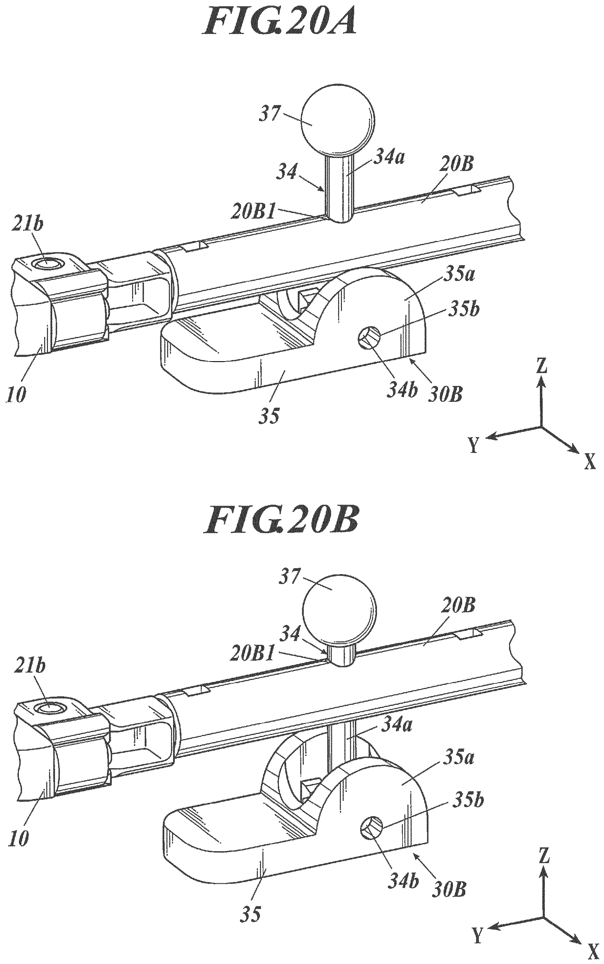

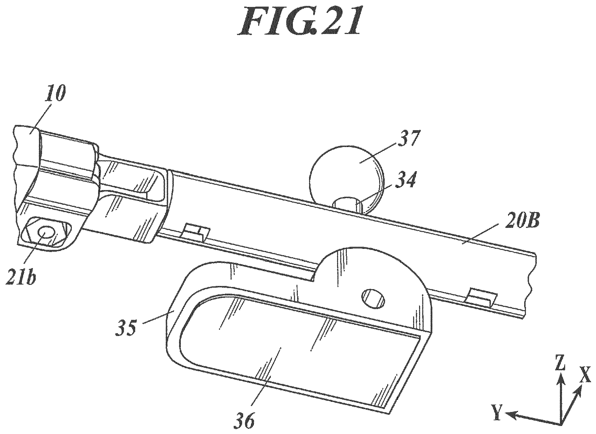

As shown in FIG. 20A, FIG. 20B and FIG. 21, the support part 30B includes a T-shaped movable connecting bar 34, a movable frame 35, a rubber pad 36 and a bar end 37.

A main shaft 34a of the T-shaped movable connecting bar 34 is fitted in and held by a vertical hole 20B1 formed in the HMD temple 20B. Elastic friction fitting at this portion enables vertical sliding movement and rotation on the Z axis of the support part 30B as a whole.

At the upper end portion of the main shaft 34a, the bar end 37 having a size that cannot go inside the hole 20B1 is fixed.

Side shafts 34b extend from the lower end portion of the main shaft 34a in both directions orthogonal to the main shaft 34a, and are fitted in and held by holes 35b provided in both side-wall parts 35a of the movable frame 35. Elastic friction fitting at this portion(s) enables vertical rotation of the movable frame 35 and the rubber pad 36 that is integrated with the movable frame 35. As shown in FIG. 21, the rubber pad 36 is fixed to the lower surface of the movable frame 35.

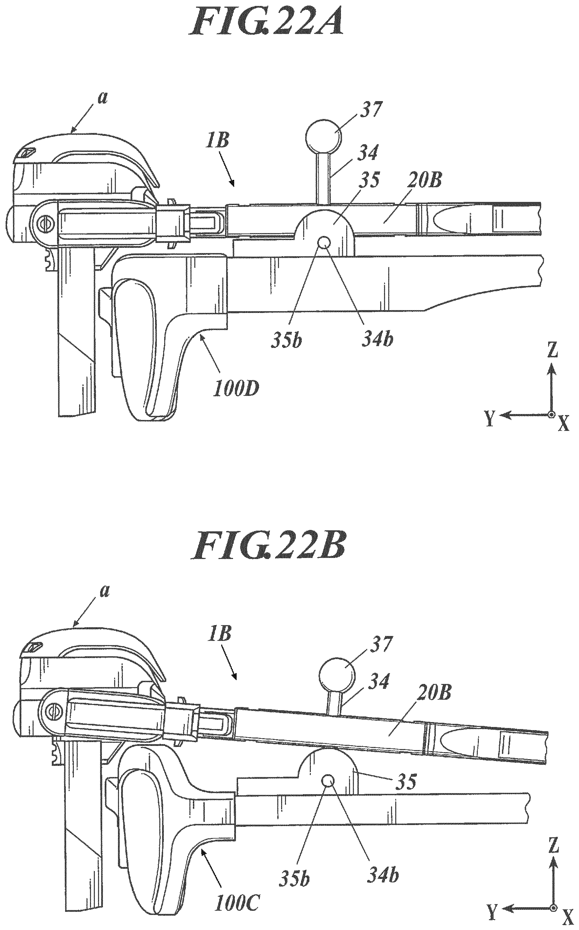

Having the above-described moving mechanism of the support part 30B enables adjustment of the vertical position, the vertical angle and the horizontal angle of the rubber pad 36 according to the shape of the glasses 100 (100C, 100D) as shown in FIG. 22A and FIG. 22B. This ensures a large contact area of the rubber pad 36 and the glasses 100 (100C, 100D).

### [Third Embodiment]

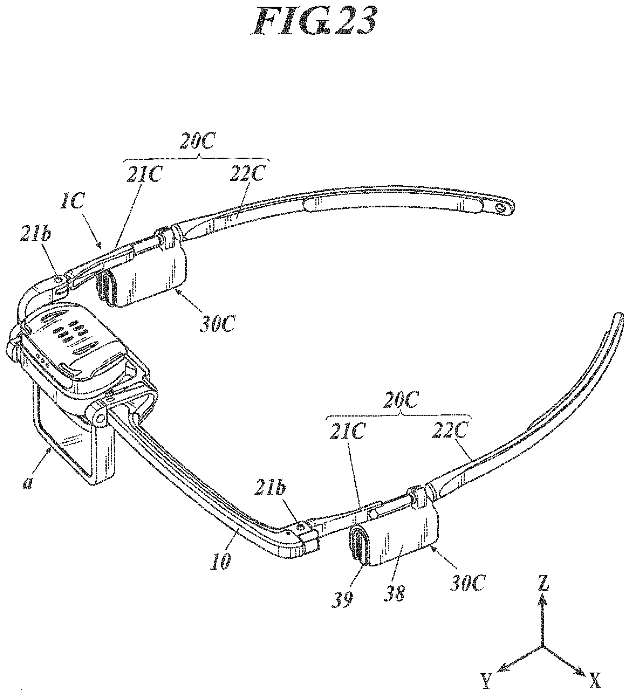

Next, a head-mounted display 1C according to a third embodiment of the present invention is described with reference to FIG. 23 to FIG. 26C.

Differences between this embodiment and the first embodiment are in that each support part 30C is configured to hold the temple 101 of the glasses 100 from the inner surface and the outer surface of the temple 101; and the moving mechanism of a fore part 21C of an HMD temple 20C and the support part 30C is a ball joint. The mechanism for the vertical rotation about the shaft hinge 21a in the first embodiment is replaced by the ball joint. The HMD temple 20C is divided into the fore part 21C and a rear part 22C. For the components corresponding to those of the first embodiment, the same reference numerals are used.

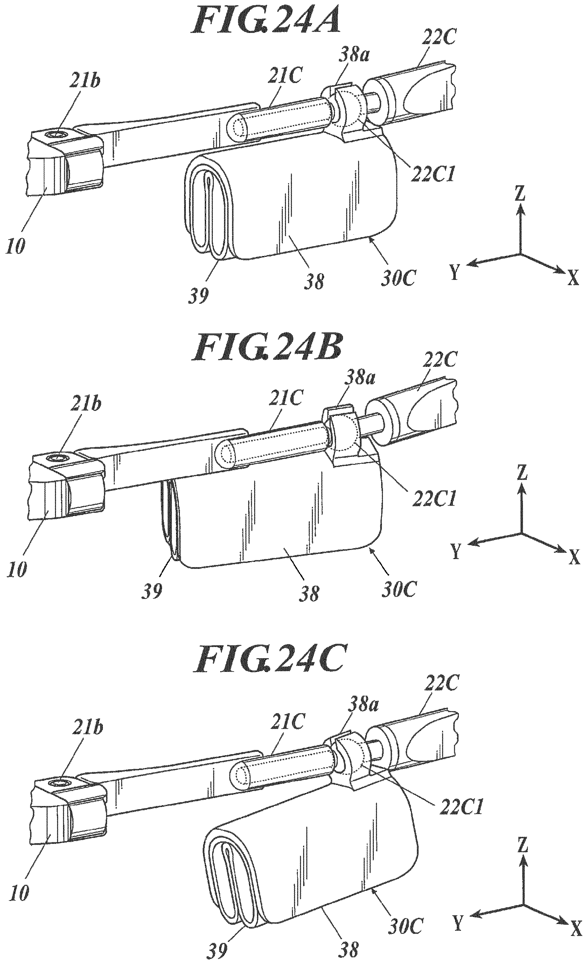

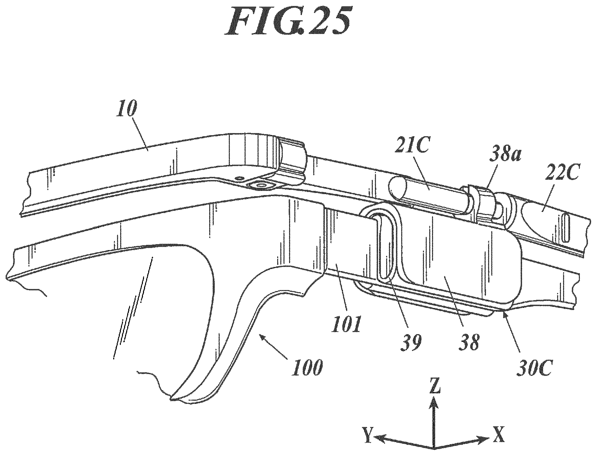

As shown in FIG. 24A, FIG. 24B, FIG. 24C and FIG. 25, the support part 30C includes a movable connecting frame 38 and an elastic clipping member 39, and the movable connecting frame 38 has a ball holding part 38a having a circular inner surface that holds a joint ball. The movable connecting frame 38 is configured to be saddle-shaped so as to straddle the temple 101, and in it, the elastic clipping member 39 having a large elastic deformation amount is fixed or formed integrally.

A joint ball 22C1 formed as the front end portion of the rear part 22C is fitted in and held by the ball holding part 38a. Elastic friction fitting at this portion enables vertical rotation and horizontal rotation of the support part 30C as a whole within a predetermined angle range(s), and also enables 360° rotation thereof about the longitudinal-direction axis (Y axis) of the rear part 22C. The latter, namely, the 360° rotation, can deal with the right-left switching of the image display unit a.

A joint ball (not shown) formed as the rear end portion of the fore part 21C is fitted in and held by a ball holding hole having a circular inner surface and being open in the front end surface of the joint ball 22C1. Elastic friction fitting at this portion enables vertical rotation and horizontal rotation of the fore part 21C within a predetermined angle range(s).

The elastic clipping member 39 may be made of rubber material or the like, and accordingly be provided with elasticity to receive/hold the temple 101 and have a clipping pressure and also provided with slip resistance.

Having the above-described moving mechanism enables adjustment of the vertical angle and the horizontal angle of the support part 30C and the vertical position thereof with respect to the main frame 10 according to the shape of the glasses 100. This ensures a large area of the temple 101 being held in and by the support part 30C.

Further, the vertical rotation of the fore part 21C enables adjustment of the angle of the fore part 21C with respect to the rear part 22C according to the height of the front of the glasses 100, and accordingly enables adjustment of the height of the image display unit a.

Because the head-mounted display 1C of this embodiment is configured such that the support part 30C holds the temple 101 of the glasses 100 from the inner surface and the outer surface of the temple 101, the horizontal rotation function of the support part 30C is used to make the support part 30C be parallel to the temple 101.

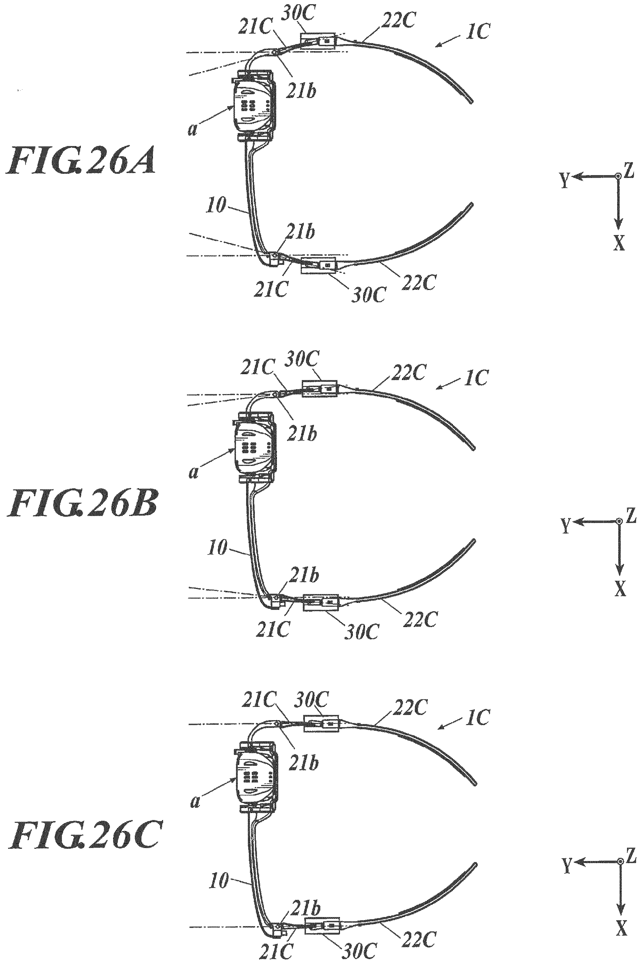

To deal with the fact that distance between the right and left temples 101, 101 differs depending on the wearer and the type of the glasses 100, the following mechanism functions. That is, as shown in FIG. 26A, FIG. 26B and FIG. 26C, the fore parts 21C are configured to be rotatable about the respective shaft hinges 21b to an angle(s) at which the fore parts 21C spread in the rear, taking the shaft hinges 21b as the points of origin. By the angle(s) (angle(s) around the Z axis) of the fore parts 21C shown in FIG. 26A, FIG. 26B and FIG. 26C, the right-left positions of the support parts 30C are adjustable according to the distance between the right and left temples 101, 101.

Regardless of the angle(s) of the fore parts 21C, the wearability is maintained by rotating the rear parts 22C with respect to the fore parts 21C with the ball joints of the fore parts 21C and the rear parts 22C such that the rear parts 22C are along the sides of the head of the wearer.

The ball joints of the rear parts 22C and the fore parts 21C may be arranged in front of ball joints of the rear parts 22C and the support parts 30C.

Deformability of the elastic clipping members 39 can allow difference in orientation between the temples 101 and the support parts 30C.

### [Fourth Embodiment]

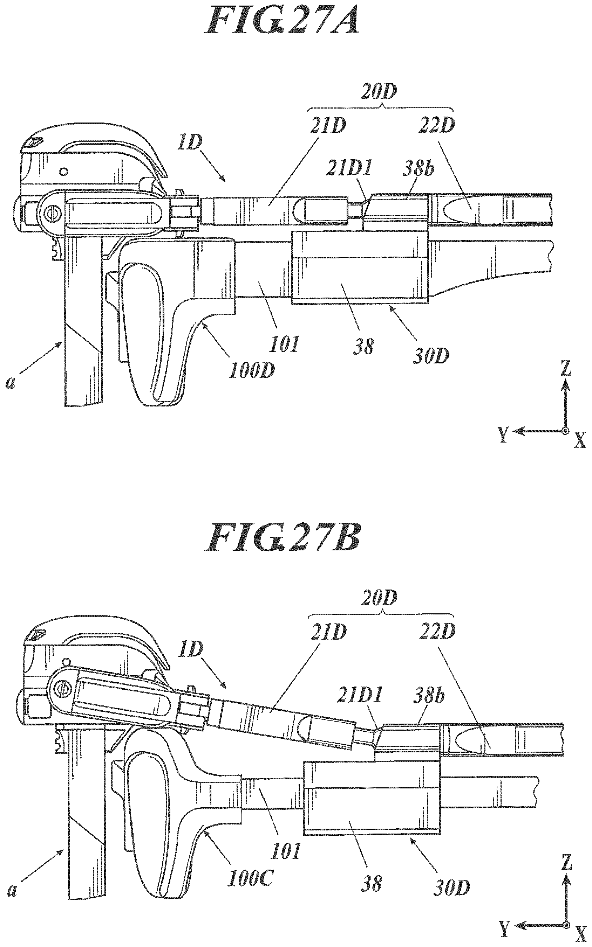

Next, a head-mounted display 1D according to a fourth embodiment of the present invention is described with reference to FIG. 27A and FIG. 27B.

This embodiment is an embodiment having the minimum change from the third embodiment. For the components corresponding to those of the third embodiment, the same reference numerals are used.

The head-mounted display 1D of this embodiment is, as with the third embodiment, configured such that each support part 30D holds the temple 101 of the glasses 100 (100C, 100D) from the inner surface and the outer surface of the temple 101, but a joint ball 21D1 as the rear end portion of a fore part 21D of an HMD temple 20D is fitted in and held by a ball holding hole formed in the front end portion of a connecting part 38b.

Further, to a connecting section formed at the rear end portion of the connecting part 38b, the front end portion of a rear part 22D of the HMD temple 20D is connected, so that the support part 30D and the rear part 22D are fixed integrally.

Because the head-mounted display 1D is held by the wearer sufficiently with the support parts 30D holding/clipping the temples 101, the rear parts 22D are attachable/detachable to/from the connecting parts 38b.

In this embodiment too, the position adjustment mechanism(s) for the shaft hinges 21b by the guide holes 10a described in the first embodiment may be adopted. This further increases degree of freedom in adjustment of the right-left positions of the support parts 30D. The same position adjustment mechanism may also be applied to and carried out in the second and third embodiments.

Further, the support parts configured to hold/clip the temples 101 may be applied to and carried out in the first and second embodiments.

According to the above embodiments, the support parts 30, forming a pair, that touch and are supported by the glasses 100 are arranged between the hinge parts (21b) at the front ends of the HMD temples 20 and the ears H1. Hence, the weight of the head-mounted display is not concentrated on the front of the glasses 100 but is spread to the ears and the nose and well balanced between the right and the left, and accordingly the head-mounted display is stable and the weight is hardly felt, namely, excellent wearability is achieved.

Further, because the head-mounted display is not affected by the shape of the front frame of the glasses 100, in being worn, it is usable regardless of the type of glasses.

Because the support parts 30 are held to be movable upward and downward (vertically) and rightward and leftward (horizontally), the support parts 30 can be made to fit the shapes of the temples 101 of the glasses 100 flexibly and exhibit the non-slip effect effectively.

According to the first, third and fourth embodiments, the support parts 30 are held to be rotatable about the longitudinal-direction axis of the HMD temples. Hence, even if the image display unit a is attached to the main frame 10 upside down, the main frame 10 is inverted vertically, and thereby arrangement of the display part a11 is switched to the right or the left, the support parts 30 can be made to face the temples 101 of the glasses 100, and accordingly the wearing form by using the support parts 30 to support can be taken.

In the second embodiment, the right-left switching of the image display unit a can be dealt with, if it has structure in which a female screw formed on/in the bar end 37 and a male screw formed at the upper end portion of the main shaft 34a are screwed together and thereby fixed, and the bar end 37 is detached, the main shaft 34a is inverted vertically, and then they are attached again.

As described above, the present invention is a head-mounted display including:
an image display unit having an image generating unit that generates an image, and a display part that is arranged in front of at least one eye of a wearer and displays the image; and
a wearable device to which the image display unit is attached, wherein
the wearable device includes a main frame arranged in front of a face of the wearer, and a pair of HMD temples continuous to both ends of the main frame,
the pair of the HMD temples is provided with supports that are supported by glasses worn by the wearer so that the head-mounted display is worn by the wearer, and
a pair of support parts is provided by being connected to the pair of the HMD temples, the support parts touching temples of the glasses in front of ears of the wearer and constituting the supports.

Preferably, in the present invention, the support parts are formed to be approximately parallel to and long in a longitudinal direction of the HMD temples, and at rear end portions close to the ears, connected to the HMD temples to be rotatable vertically and horizontally with respect to the HMD temples.

Preferably, in the present invention, the support parts are connected to the HMD temples to be slidable forward and backward along the HMD temples.

Preferably, in the present invention, the support parts are connected to the HMD temples by ball joints.

Preferably, in the present invention, the support parts are connected to the HMD temples to be slidable vertically with respect to the HMD temples.

Preferably, in the present invention, the support parts are fitted and connected to the HMD temples by elastic friction fitting such that an operation to arrange the support parts with respect to the HMD temples is allowed, and the support parts are stably held by the HMD temples by arbitrary arrangement.

Preferably, in the present invention, each of the HMD temples is divided into a fore part and a rear part, each of the support parts is connected to the rear part, and the fore part is connected, in front of a connecting portion where the support part is connected to the rear part, to the rear part to be rotatable vertically and/or horizontally with respect to the rear part.

Preferably, in the present invention, the image display unit is configured to be settable on the main frame with the image display unit vertically inverted.

Preferably, in the present invention, the support parts are configured to be settable on the HMD temples with the support parts inverted 180 degrees about a longitudinal-direction axis of the HMD temples while being held by the HMD temples.

Preferably, in the present invention, of the support parts, parts that touch the temples of the glasses are constituted of non-slip members.

Preferably, in the present invention, each of the support parts is configured to hold each of the temples from an inner surface and an outer surface of the temple.

Preferably, in the present invention, front ends of the HMD temples are connected to the main frame movably such that the front ends can be close to and away from one another.

### Industrial Applicability

The present invention is applicable to a display for a wearable computer and so forth.

### Description of Reference Numerals

- 1A: Head-Mounted Display
- 1B: Head-Mounted Display
- 1C: Head-Mounted Display
- 1D: Head-Mounted Display
- 10: Main Frame
- 20: HMD Temple
- 20B: HMD Temple
- 20C: HMD Temple
- 20D: HMD Temple
- 21: Fore Part
- 21C: ForePart
- 21D: ForePart
- 21a: Shaft Hinge
- 21b: Shaft Hinge
- 22: Rear Part
- 22C: Rear Part
- 22C1: Joint Ball
- 22D: Rear Part
- 22a: Hinge Connecting Part
- 22b: Support-Part Connecting Part
- 22b1: Guide Groove
- 22c: Columnar Part
- 30: Support Part
- 30B: Support Part
- 30C: Support Part
- 30D: Support Part
- 33: Rubber Pad
- 36: Rubber Pad
- 100: Glasses
- 100A: Glasses
- 100B: Glasses
- 100C: Glasses
- 100D: Glasses
- 101: Temple
- a: Image Display Unit
- a10: Display Member
- a11: Display Part
- a13: Hologram Element
- a20: Casing
- H: Wearer
- H1: Ear

## Claims

1. A head-mounted display comprising:
an image display unit having an image generating unit that generates an image, and a display part that is arranged in front of at least one eye of a wearer and displays the image; and
a wearable device to which the image display unit is attached, wherein
the wearable device includes a main frame arranged in front of a face of the wearer, and a pair of HMD temples continuous to both ends of the main frame,
the pair of the HMD temples is provided with supports that are supported by glasses worn by the wearer so that the head-mounted display is worn by the wearer, and
a pair of support parts is provided by being connected to the pair of the HMD temples, the support parts touching temples of the glasses in front of ears of the wearer and constituting the supports.

2. The head-mounted display according to claim 1, wherein the support parts are formed to be approximately parallel to and long in a longitudinal direction of the HMD temples, and at rear end portions close to the ears, connected to the HMD temples to be rotatable vertically and horizontally with respect to the HMD temples.

3. The head-mounted display according to claim 1 or claim 2, wherein the support parts are connected to the HMD temples to be slidable forward and backward along the HMD temples.

4. The head-mounted display according to claim 2, wherein the support parts are connected to the HMD temples by ball joints.

5. The head-mounted display according to claim 1, wherein the support parts are connected to the HMD temples to be slidable vertically with respect to the HMD temples.

6. The head-mounted display according to any one of claims 2 to 5, wherein the support parts are fitted and connected to the HMD temples by elastic friction fitting such that an operation to arrange the support parts with respect to the HMD temples is allowed, and the support parts are stably held by the HMD temples by arbitrary arrangement.

7. The head-mounted display according to any one of claims 1 to 4, wherein each of the HMD temples is divided into a fore part and a rear part, each of the support parts is connected to the rear part, and the fore part is connected, in front of a connecting portion where the support part is connected to the rear part, to the rear part to be rotatable vertically and/or horizontally with respect to the rear part.

8. The head-mounted display according to any one of claims 2 to 4, wherein the image display unit is configured to be settable on the main frame with the image display unit vertically inverted.

9. The head-mounted display according to claim 8, wherein the support parts are configured to be settable on the HMD temples with the support parts inverted 180 degrees about a longitudinal-direction axis of the HMD temples while being held by the HMD temples.

10. The head-mounted display according to any one of claims 1 to 9, wherein, of the support parts, parts that touch the temples of the glasses are constituted of non-slip members.

11. The head-mounted display according to any one of claims 1 to 10, wherein each of the support parts is configured to hold each of the temples from an inner surface and an outer surface of the temple.

12. The head-mounted display according to any one of claims 1 to 11, wherein front ends of the HMD temples are connected to the main frame movably such that the front ends can be close to and away from one another.
